# EUROPEAN PATENT APPLICATION

(11) **EP 1 849 755 A1**
(43) Date of publication of application: **31.10.2007**
(21) Application number: 05703334.2
(22) Date of filing: 06.01.2005
(51) Int. Cl.: C05B 13/00, C05F 15/00, B09B 3/00, C02F 11/10

(54) **PROCESS FOR PRODUCING PHOSPHATIC FERTILIZER AND APPARATUS THEREFOR**

(71) Applicant: Sanki Engineering Co., Ltd, Chuo-Ku Tokyo 103-8331 (JP)
(72) Inventor: IWAI, Yoshihiro, Sanki Engineering Co., Ltd, Tokyo 103-8331 (JP); JOZUKA, Tetsuji, Sanki Engineering Co., Ltd, Tokyo 103-8331 (JP); KOMATSU, Takashi, Sanki Engineering Co., Ltd, Tokyo 103-8331 (JP); TAKAGI, Tadashi, Sanki Engineering Co., Ltd, Tokyo 103-8331 (JP)
(74) Representative: Zeitler, Giselher
(86) International application number: PCT/JP2005/000066
(87) International publication number: WO 2006/072982

(57) **Abstract**

The present invention provides a process that treats sludge or incineration ash emitted in greatest quantities and containing a phosphor component and that continuously produces a phosphatic fertilizer and an apparatus therefor. The process that produces a phosphatic fertilizer according to the present invention including the steps of continuously supplying a raw material composed of sludge or incineration ash containing a phosphor component and a reducing agent or a raw material composed of sludge or incineration ash containing the phosphor component, the reducing agent, and at least one of a magnesium component, a calcium component, a potassium component, and calcium-containing waste into a melting furnace which is kept in a reducing atmosphere while an interior of the melting furnace is kept in a sealed state such that the reducing atmosphere is kept in the melting furnace; keeping an inner temperature of the melting furnace at around 1400 °C, heating the raw material while suppressing evaporation of the phosphor component, and causing molten metals and molten slag to coexist in the melting furnace in a two-liquid separated phase; quenching molten slag which flows from the melting furnace; and crushing the quenched molten slag to grains having diameters of 50 µm to 2 mm.

## Description

### TECHNICAL FIELD

The present invention relates to a process that produces a phosphatic fertilizer using sludge or incineration ash that contains a phosphor component as a main raw material and to an apparatus therefor.

### BACKGROUND ART

Although it has been estimated that the amount of recoverable phosphate rock deposits is huge, the quality of recovered phosphate rock is gradually degrading for example due to an increase of impurities. Thus, it is becoming difficult to obtain high quality phosphate rock.
On the other hand, sludge that collaterally occurs in a sewage treatment is dehydrated and then incinerated. Thereafter, the resultant incineration ash is disposed of at a final disposal site. However, in recent years, the final disposal sites are becoming full. Thus, it is necessary to further reduce the volume of waste that occurs in a sewage treatment (by a volume reducing treatment).

To solve this problem, focusing on components contained in sludge, such as nitrogen, phosphor, magnesium, calcium, and potassium, dried sludge or a compost using sludge as a raw material has been used as an organic fertilizer.
However, since the concentration of a phosphor component contained in dried sludge or a compost is lower than that of a fertilizer made from phosphate rock, it cannot be expected to highly improve the fertilizing effect to the soil.

In addition, although incineration ash of sludge, municipal waste, industrial waste, and so forth contains many natural resourceful components, they have not yet sufficiently been used. In recent years, however, the finiteness of natural resources has been recognized and mass consumption of natural resources is leading to environmental destruction. Thus, recycling technologies for reusing natural resources are being actively studied. As recycling technologies using incineration ash of sludge, municipal waste, industrial waste, or the like, proposals of which such incineration ash is used as a fertilizer have been made.

In these proposals, however, a fertilizer is produced by adding 20 to 50 weight % of calcium sulfate to incineration ash of sludge. Thus, a phosphor component contained in incineration ash is not able to be effectively recycled.
To solve this problem, a method of producing a fertilizer using incineration ash including the steps of using sludge or incineration ash containing phosphor as a raw material; adding an additive containing magnesium oxide, calcium oxide, phosphoric acid, or another component to the raw material as a mixed material; melting the mixed material; quenching the molten material, obtaining slag; and crushing the slag has been proposed (for example, see patent document 1, below).

To produce a fertilizer containing a high-concentration and harmless phosphor component from incineration ash of sludge, a method of producing a phosphatic fertilizer including the steps of adding a ferrous flocculating agent to sludge; precipitating a phosphor component contained in the sludge; recovering the precipitate together with the sludge, dehydrating and baking them; obtaining sludge incineration ash containing a high-concentration phosphor component; adding coke, magnesium oxide, calcium oxide, and potassium oxide to the sludge incineration ash; heating the mixture in a melting furnace such that molten metals and molten slag coexist in a two-liquid separated phase; selectively conveying the molten slag to a water granulating tank; quenching and granulating the molten slug therein such that it can be easily handled as a fertilizer; and recovering granulated slag that contains a high-concentration phosphor component and from which metal components have been removed has been proposed (for example, see patent document 2, below).

On the other hand, most of sea shells of for example scallops and oysters, egg shells that occur in food processes of chicken eggs, and so forth are disposed of at final disposal sites.
However, in recent years, final disposal sites are becoming full. Thus, it is necessary to further reduce the volume of sea shells, egg shells, sludge incineration ash, and so forth (by a volume reducing treatment).
To effectively use calcium-containing waste such as sea shells, egg shells, and so forth, a method of producing a fertilizer using incineration ash as a raw material, including the steps of heating calcium containing waste such as sea shells of scallops and oysters and egg shells of chicken eggs, sludge incineration ash, coke, magnesium oxide, and potassium oxide in a melting furnace such that molten metals and molten slag coexist in a two-liquid separated phase; selectively conveying the molten slag to a water granulating tank; quenching the molten slag therein; recovering granulated slag that contains a phosphor component and a calcium component and from which metals have been removed; and using the slag as a fertilizer has been proposed (for example, see patent document 3, below).
Patent document 1: Japanese Unexamined Patent Application Publication No. 2001-80979
Patent document 2: Japanese Unexamined Patent Application Publication No. 2003-112988
Patent document 3: Japanese Unexamined Patent Application Publication No. 2003-112989

### DISCLOSURE OF THE INVENTION

### PROBLEMS TO BE SOLVED BY THE INVENTION

However, since the recycling technologies described in the foregoing patent document 1, patent document 2, and patent document 3 are small-scaled and experimental, they have a problem of not able to treat a large amount of sludge or incineration ash containing a phosphor component.
In addition, since the grain diameter of granulated slag (fertilizer product) of the related art was as coarse as 3 to 5 mm, the fertilizing effect was not fully facilitated.

The present invention is made to solve such problems of the related art. An object of the present invention is to provide a process that produces a phosphatic fertilizer that allows a large amount of sludge or incineration ash containing a phosphor component to be treated and a phosphatic fertilizer to be continuously produced and to provide an apparatus therefor.

### MEANS FOR SOL VING THE PROBLEMS

The present invention is a process which produces a phosphatic fertilizer, including the steps of continuously supplying a raw material composed of sludge or incineration ash containing a phosphor component and a reducing agent or a raw material composed of sludge or incineration ash containing the phosphor component, the reducing agent, and at least one of a magnesium component, a calcium component, a potassium component, and calcium-containing waste into a melting furnace which is kept in a reducing atmosphere while an interior of the melting furnace is kept in a sealed state such that the reducing atmosphere is kept in the melting furnace; keeping an inner temperature of the melting furnace at around 1400 °C, heating the raw material while suppressing evaporation of the phosphor component, and causing molten metals and molten slag to coexist in the melting furnace in a two-liquid separated phase; quenching molten slag which flows from the melting furnace; and crushing the quenched molten slag to grains having diameters of 50 µm to 2 mm.

Components of part of the main raw material are continuously measured with a fluorescent X analysis device. Additive amounts of sub raw materials are calculated based on measured values of the fluorescent X analysis device. The sub raw materials are automatically and quantitatively supplied for the calculated additive amounts.
Components of part of the molten slag is continuously measured with a fluorescent X analysis device. Measured values of the fluorescent X analysis device are fed back to calculations for additive amounts of sub raw materials.
The sludge containing the phosphor component is sludge which collaterally occurs in a sewage treatment or sludge of which a ferrous flocculating agent which traps the phosphor component has been added to sewage water, the phosphor component contained in the sewage water has been precipitated, and the phosphor component has been recovered from the sewage water together with the sludge.

The incineration ash containing the phosphor component is ash of which sludge, municipal waste, or industrial waste has been incinerated or ash of which a ferrous flocculating agent which traps the phosphor component has been added to sewage water, the phosphor component contained in the sewage water has been precipitated, the precipitated phosphor component has been recovered from the sewage water together with sludge, and they have been dehydrated and incinerated.
The material is continuously supplied into the melting furnace with at least two push type supply devices each having a supply opening, at least two dumper open/close type supply devices each having a passage, or at least two screw type supply devices each having a supply opening, while keeping an interior of the melting furnace in the sealed state such that the interior of the melting furnace is kept in the reducing atmosphere.

A water granulating treatment is performed for molten slag which flows from the melting furnace with industrial water at a temperature of 20 to 30 °C and the water granulated slag is obtained. The water granulated slag is conveyed with a screw conveyor while dehydrating the water granulated slag. The water granulated slag is crushed to grains having diameters of 50 µm to 2 mm with a roll crusher.
In addition, a water granulating treatment is performed for molten slag that flows from the melting furnace with industrial water at a temperature of 20 to 30 °C and water granulated slag is obtained. The water granulated slag is delivered into a tank having a dehydration wire mesh with a pump. The water granulated slag is dehydrated with the tank. The water granulated slag is crushed to grains having diameters of 50 µm to 2 mm with a roll crusher.

Molten slag which flows from the melting furnace is quenched with air. The molten slag is crushed to grains having diameters of 50 µm to 2 mm with a roll crusher.
A content of phosphor contained in sludge or incineration ash containing the phosphor component is pre-obtained. Amounts of the magnesium component and the calcium component to the sludge or incineration ash containing the phosphor component are specified such that a mole ratio of granulated phosphorus pentoxide, magnesium oxide, and calcium oxide obtained by a water granulating treatment for the molten slag becomes 1 : 1.5 to 6 : 1.5 to 6.

The present invention is an apparatus which produces a phosphatic fertilizer, including a melting furnace which has at least two raw material supply section, the melting furnace being used in a reducing atmosphere and causing molten metals and molten slag to coexist in a two-liquid separated phase; a raw material supply device which continuously supplies a raw material composed of sludge or incineration ash containing a phosphor component and a reducing agent or a raw material composed of sludge or incineration ash containing the phosphor component, the reducing agent, and at least one of a magnesium component, a calcium component, a potassium component, and calcium-containing waste into the melting furnace which is kept in a reducing atmosphere while an interior of the melting furnace is kept in a sealed state such that the reducing atmosphere is kept in the melting furnace; an inner furnace temperature control device which keeps an inner temperature of the melting furnace at around 1400 °C and heats the raw material while suppressing evaporation of the phosphor component; a quenching device which quenches molten slag which flows from the melting furnace; and a crushing device which crushes the quenched molten slag to grains having diameters of 50 µm to 2 mm.

The apparatus may include a fluorescent X ray analysis device and a calculation section which continuously measure components of part of the main raw material, calculate additive amounts of sub raw materials based on measured values, and automatically and quantitatively supply the sub raw materials for the calculated amounts. The fluorescent X ray analysis device may continuously measure components of part of the molten slag and feed back measured values to calculations for additive amounts of sub raw materials.
In the melting furnace, the raw material supply section is composed of at least two push type supply devices each having a supply opening, at least two dumper open/close type supply devices each having a passage, or at least two screw type supply devices each having a supply opening.

The quenching device is composed of a water granulating treatment section which performs a water granulating treatment with industrial water at a temperature of 20 to 30 °C and obtains water granulated slag; and a screw conveyer which conveys the water granulated slag while dehydrating the water granulated slag.
In addition, the quenching device is composed of a water granulating treatment section which performs a water granulating treatment with industrial water at a temperature of 20 to 30 °C and obtains water granulated slag; a tank which stores the water granulated slag and which has a dehydration wire mesh; and a pump which delivers the water granulated slag into the tank.

In addition, the quenching device is composed of a conveyer which conveys molten slag that flows from the melting furnace; and a fan which quenches the molten slag placed on the conveyer with air.
In addition, the crushing device, which crushes the quenched molten slag to grains having diameters of 50 µm to 2 mm, is a roll crusher.

### EFFECTS OF THE INVENTION

According to the present invention, since a mixed raw material is supplied while a reducing atmosphere is kept, a phosphatic fertilizer from which harmful components have been securely removed can be continuously produced.
In addition, according to the present invention, since quenched molten slag is crushed to grains having diameters of 50 µm to 2 mm, they can be effectively fertilized to plants.
In addition, according to the present invention, since components of a product are managed with fluorescent X rays, component values of the product can be prevented from fluctuating against fluctuating of components of a raw material.

### BRIEF DESCRIPTION OF THE DRAWINGS

[Fig. 1] is a schematic diagram describing an outline of a phosphatic fertilizer producing apparatus according to a first embodiment of the present invention.
[Fig. 2] is an enlarged schematic diagram describing principal sections shown in Fig. 1.
[Fig. 3] is a top view describing Fig. 2.
[Fig. 4] is a schematic diagram describing operations of rotary feeders 1 8a and 19a disposed below a first furnace overhead storage hopper 18 and a second furnace overhead storage hopper 19, respectively, shown in Fig. 1.
[Fig. 5] is a schematic diagram describing the relationship between an electrode 23 and a lifting device 31 shown in Fig. 1.
[Fig. 6] is a schematic diagram describing operations of a first push type raw material supply device 32 and a second push type raw material supply device shown in Fig. 1.
[Fig. 7] is a schematic diagram showing level sensors disposed in the first furnace overhead storage hopper 18 and the second furnace overhead storage hopper 19 shown in Fig. 1.
[Fig. 8] is a schematic diagram showing a flow of a system control shown in Fig. 1.
[Fig. 9] is a schematic diagram describing a control device 59 that controls feeding amounts of a main raw material and sub raw materials.
[Fig. 10] is a schematic diagram describing a control device 60 that controls the supply of raw materials and an operation of an electric resistance melting furnace 20.
[Fig. 11] is a schematic diagram showing the relationship between a melting temperature and the content of P₂O₅.
[Fig. 12] is a schematic diagram showing the relationship between a melting temperature and citric acid solubility of MgO.
[Fig. 13] is a schematic diagram showing the relationship between MgO/P₂O₅ (mole ratio) and citric acid solubility of P₂O₅.
[Fig. 14] is a schematic diagram showing the relationship between MgO/P₂O₅ (mole ratio) and citric acid solubility of P₂O₅.
[Fig. 15] is a schematic diagram describing principle sections of a phosphatic fertilizer producing apparatus according to a second embodiment of the present invention.

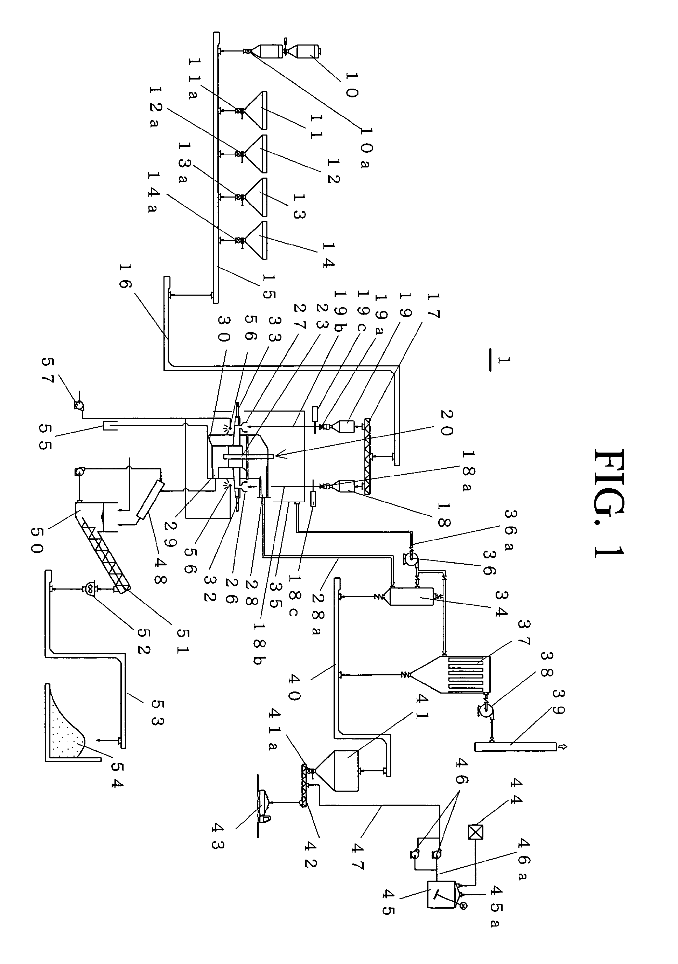

[Fig. 1 6] is a top view describing Fig. 1 5.

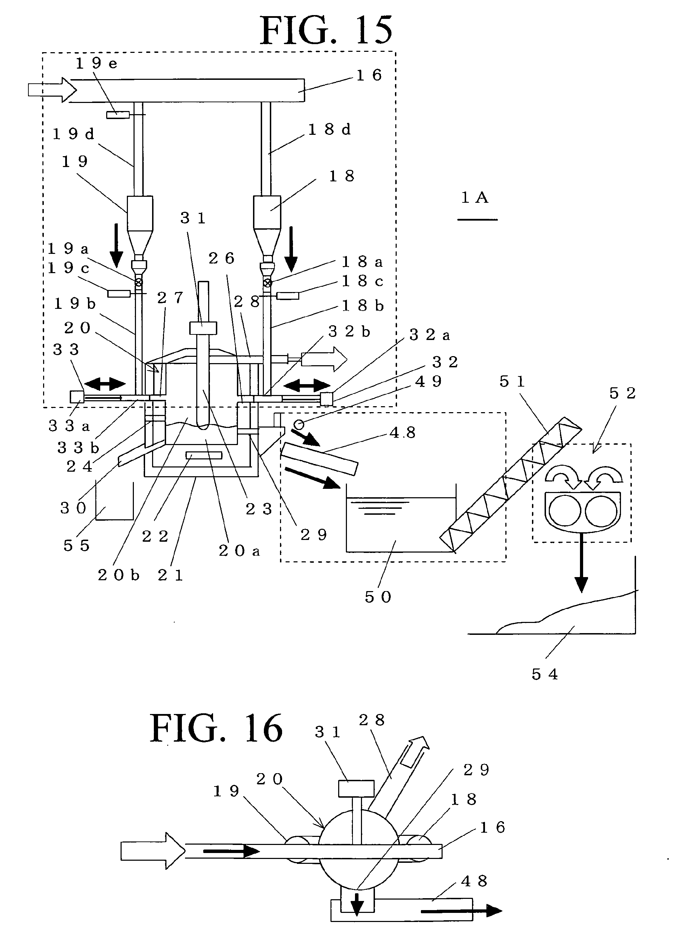

[Fig. 1 7] is a schematic diagram describing a control device 60A that controls the supply of raw materials and an operation of an electric resistance melting furnace 20 shown in Fig. 15.

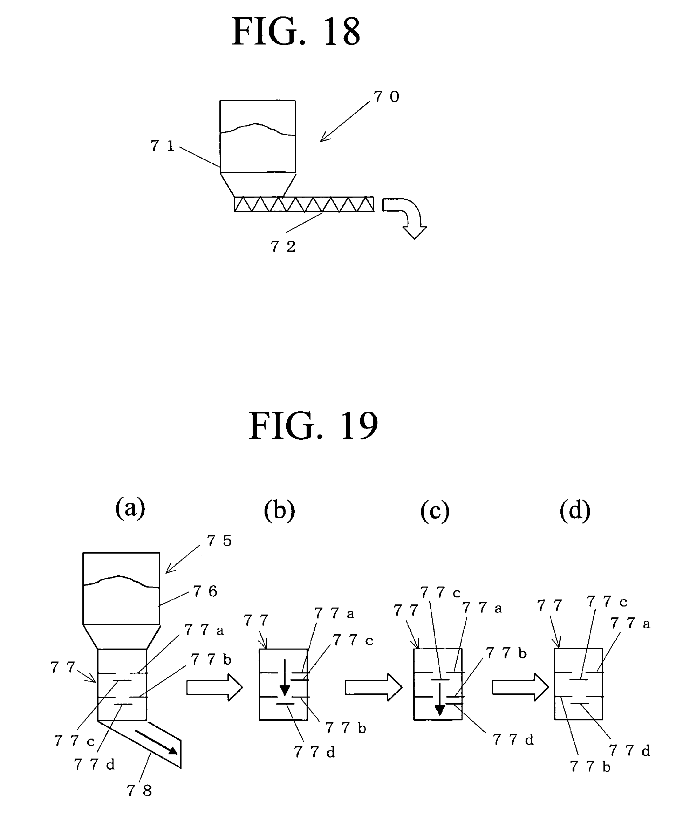

[Fig. 18] is a schematic diagram describing a screw type raw material supply device.
[Fig. 19] is a schematic diagram showing a dumper type raw material supply device.

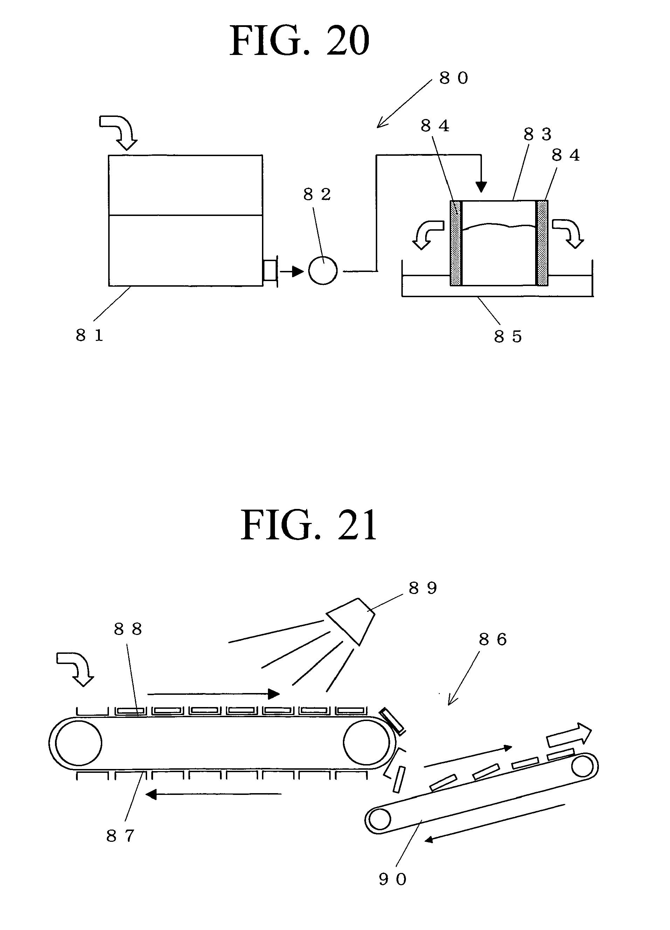

[Fig. 20] is a schematic diagram describing a pump type molten slag cooling device.
[Fig. 21] is a schematic diagram describing an air-cooling type molten slag cooling device.

### BEST MODE FOR CARRYING OUT THE INVENTION

Next, with reference to the accompanying drawings, embodiments of the present invention will be described.

### (First embodiment)

Fig. 1 to Fig. 14 are schematic diagrams describing an outline of a phosphatic fertilizer producing apparatus according to a first embodiment of the present invention.
The phosphatic fertilizer producing apparatus 1 includes a main raw material hopper 10 that stores incineration ash containing a phosphor component supplied from a sludge treatment facility (not shown), a first sub raw material hopper 11 that stores a reducing agent made of coke, a second sub raw material hopper 12 that stores a magnesium component, a third sub raw material hopper 13 that stores a calcium component, and a fourth sub raw material hopper 14 that stores a potassium component. Disposed below the main raw material hopper 10 is a rotary feeder 10a that quantitatively feeds the main raw material. Disposed below the first sub raw material hopper 1 1, the second sub raw material hopper 12, the third sub raw material hopper 13, and the fourth sub raw material hopper 14 are rotary feeders 11 a, 1 2a, 13a, and 14a that feed the corresponding sub raw materials for their constant amounts, respectively.

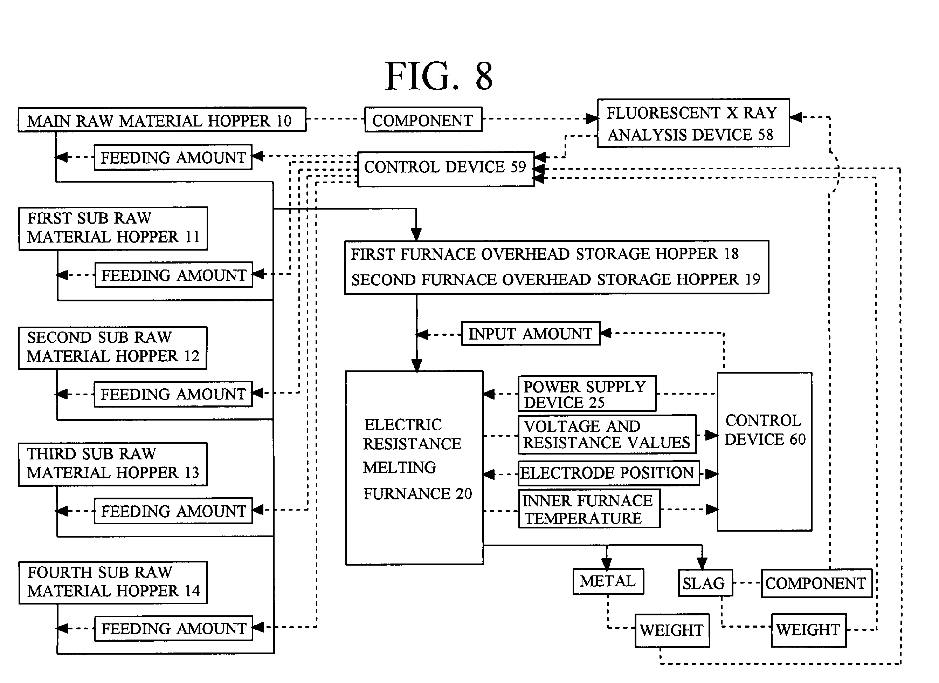

In this embodiment, to prevent the component values of the product from fluctuating due to fluctuating of components of raw materials, as shown in Fig. 8, the product is managed with fluorescent X rays. Thus, a phosphatic fertilizer whose components are stable can be produced from raw materials whose components fluctuate. In this embodiment, since the main raw material is waste or the like, a phosphor component of sewage sludge or the like that largely affects the quality of a phosphatic fertilizer as a product fluctuates season by season. In addition, the value of the main component of sewage sludge or the like fluctuates in each region where it occurs. Likewise, the components of other wastes are not stable. When a phosphatic fertilizer is produced, the adding conditions of sub raw materials such as a reducing agent of the main raw material, a magnesium component, and a potassium component are specified. Since the lower limit values of assured components of phosphatic fertilizers are specified in Fertilizer Control Act, unless the component of the main raw material is stable, not only the component values of a phosphatic fertilizer may fluctuate, but the quality thereof may deteriorate (thus, a phosphatic fertilizer having low citric acid solubility is produced). To prevent such a situation, part of the main raw material is supplied to a fluorescent X ray analysis device 58 so as to quickly measure the component value of the main raw material. Based on the measured value, the additive amounts of the sub raw materials are calculated and corresponding signals are sent to feeding devices of sub raw material hoppers (to adjust the feeding amounts of the rotary feeders 11 a, 12a, 1 3a, and 14a) such that the sub raw materials are automatically supplied for their constant amounts. In addition, part of the produced phosphatic fertilizer is continuously supplied to the fluorescent X ray analysis device 58 and the measured value is quickly fed back to the calculations for the additive amounts of the sub raw materials. As a result, even if the component of the main raw material is not stable, a phosphatic fertilizer whose component values are stable can be produced.

Disposed below the main raw material hopper 10, the first sub raw material hopper 11, the second sub raw material hopper 12, the third sub raw material hopper 13, and the fourth sub raw material hopper 14 is a first raw material supply conveyor 1 5 composed of a case conveyor.
Disposed downstream of the first raw material supply conveyor 15 is a second raw material supply conveyor 16 composed of a case conveyor.

Disposed downstream of the second raw material supply conveyor 16 is a sorting conveyor 1 7. Disposed downstream of the sorting conveyor 17 are a first furnace overhead storage hopper 18 and a second furnace overhead storage hopper 19.
Disposed below the first furnace overhead storage hopper 18 and the second furnace overhead storage hopper 19 are rotary feeders 18a and 19a that quantitatively feed a mixed raw material of the main raw material and the sub raw materials.

Disposed downstream of the rotary feeder 18a is a lower duct 18b having a first dumper 18c. Disposed downstream of the rotary feeder 19a is a lower duct 19b having a second dumper 1 9c.
The lower duct 18b is in communication with a first push type raw material supply device 32 disposed at a raw material input opening 26 of an electric resistance melting furnace 20. On the other hand, the lower duct 19b is in communication with a second push type raw material supply device 33 disposed at a raw material input opening 27 of the electric resistance melting furnace 20.

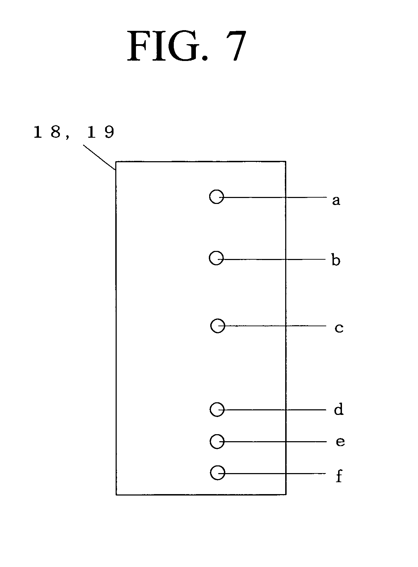

As shown in Fig. 7, the first storage hopper 18 and the second storage hopper 19 each are provided with a total of six level sensors that are an upper position level sensor a, middle position level sensors b and c, and low position level sensors d to f.
The electric resistance melting furnace 20 is composed of a furnace body 21 having a melting space surrounding by lining of a carbonaceous block, an electrode 22 attached to the lining such that the electrode 22 is placed at a lower position of the melting space, a carbonaceous electrode 23 vertically movably disposed at an upper portion of the furnace body such that the distal end of the carbonaceous electrode 23 is positioned at the center of the melting space, a temperature sensor 24 disposed on a wall surface of the furnace body, and a power supply device 25 in communication with the electrodes 22 and 23.

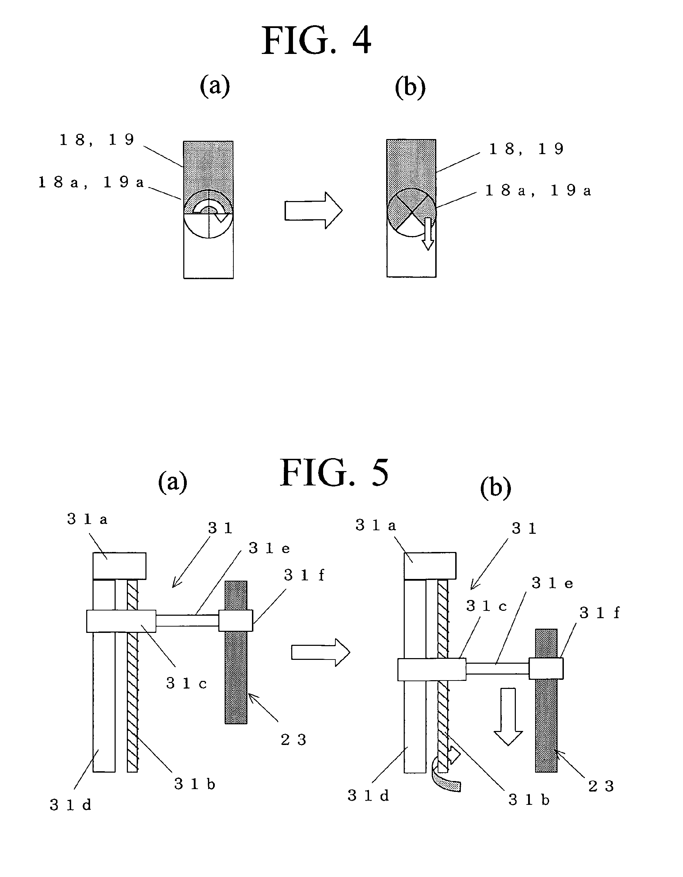

Disposed in the furnace body 21 are the raw material input openings 26 and 27 that communicate from the exterior of the furnace body 21 to an upper portion of the melting space, a gas discharge opening 28 that communicates from the upper portion of the melting space to a secondary combustion furnace 34 of a discharge gas treatment facility, a slag discharge opening 29 that communicates from a middle vertical portion of the melting space to the exterior of the furnace body 21, and a metal discharge opening 30 that communicates from the proximity of an inner bottom of the melting space to the exterior of the furnace body 21.
As shown in Fig. 5, the electrode 23 is lifted up and down by a lifting device 31. The lifting device 31 is composed of for example a motor 31 a, a threaded rod 31 b rotated by the motor 31 a, a guide member 31 c lifted up and down by the threaded rod 31 b, a guide support member 31 d that supports lifting up/down of the guide member 31 c, a guide pin 31 e that is in communication with the guide member 31c, and an electrode support member 31f that is fixed to the electrode 23 and that is in communication with the electrode 23 through the guide pin 31 e.

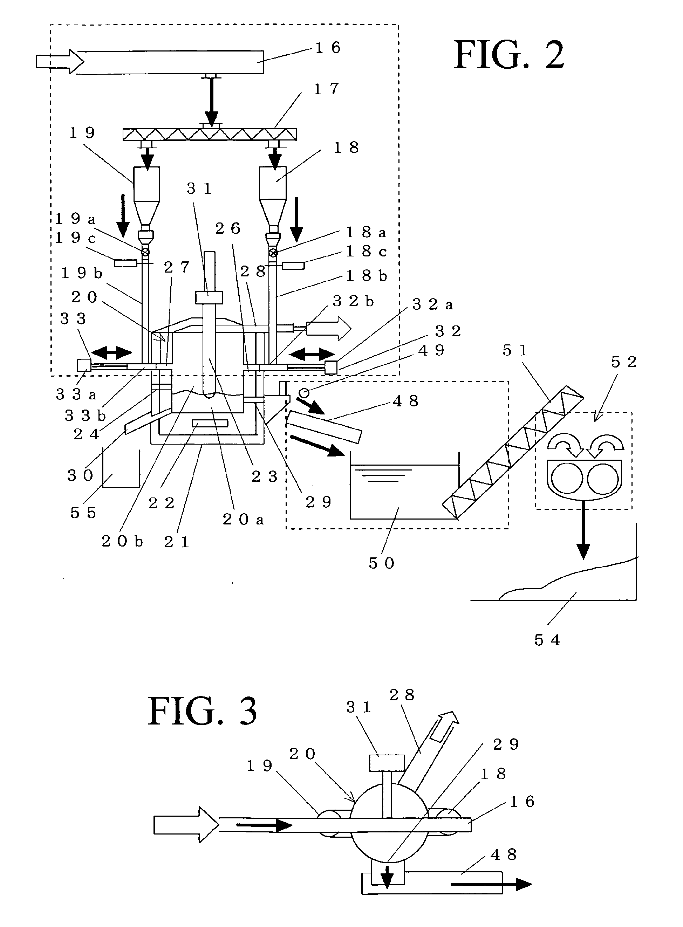

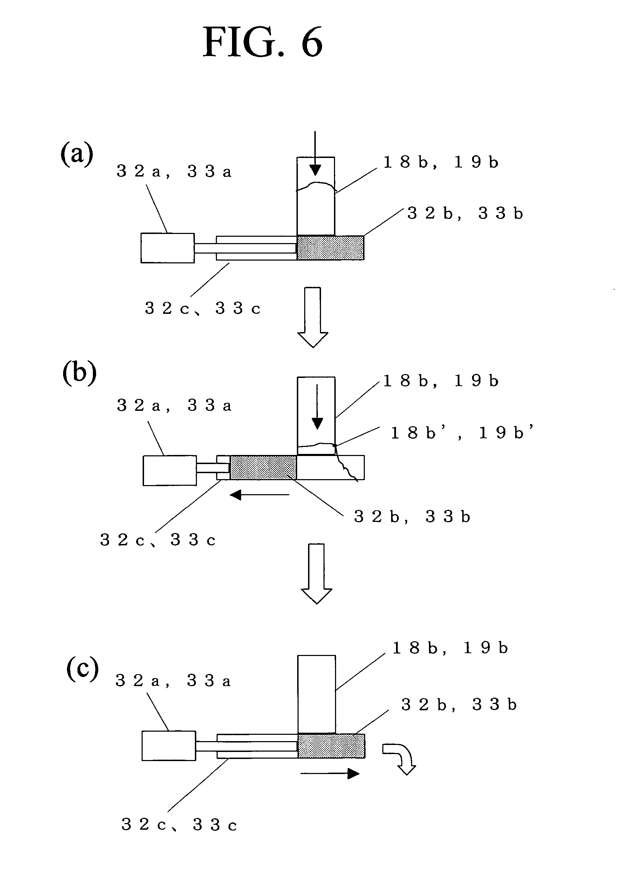

As shown in Fig. 2 and Fig. 6, the first push type raw material supply device 32 and the second push type raw material supply device 33 are composed of hydraulic cylinders 32a and 33a, pistons 32b and 33b moved by the hydraulic cylinders 32a and 33a, and cylinders 32c and 33c that guide the pistons 32b and 33b, that are in communication with the lower duct 18b and the lower duct 19b, and that push the raw material to the raw material input openings 26 and 27, respectively.

As shown in Fig. 1 and Fig. 2, disposed at the gas discharge opening 28 is a duct 28a that is in communication with the secondary combustion furnace 34.
As shown in Fig. 1, disposed at the upper portion of the electric resistance melting furnace 20 is a cover member 35 that surrounds the electric resistance melting furnace 20. The cover member 35 is in communication with a turbo type secondary air fan 36 through a duct 36a. The secondary air fan 36 is in communication with the secondary combustion furnace 34 and a melting furnace bag filter 37. The melting furnace bag filter 37 is in communication with a melting furnace chimney 39 through a melting furnace attraction fan 38.

Disposed below the secondary combustion furnace 34 and the melting furnace bag filter 37 is a dust conveyor 40 composed of a case conveyor. Disposed downstream of the dust conveyor 40 is a dust hopper 41. Disposed below the dust hopper 41 is a rotary feeder 41 a that quantitatively feeds dust. Disposed downstream of the dust hopper 41 is a two-axis puddle type dust humidifying device 42. Disposed below the dust humidifying device 42 is a conveying means 43 such as a truck that conveys dust. Supplied to the dust humidifying device 42 is a chelate agent diluted by sand filtered water 45a. A chelate agent supply device 44 is composed of a chelate agent storage tower 45 that stores a chelate agent diluted with sand filtered water, a diaphragm type chelate agent supply pump 46 that is in communication with the chelate agent storage tower 45 through a pipe 46a, and a pipe 47 that is in communication with the chelate agent supply pump 46 and the dust humidifying device 42.

As shown in Fig. 1 to Fig. 3, disposed below the slag discharge opening 29 of the furnace body 21 is a semi-circular water granulating slope 48 that causes molten slag to flow downward. Disposed in the water granulating slope 48 is a water supply device 49 that causes water to flow to the water granulating slope 48. Disposed downstream of the water granulating slope 48 is a water granulating tank 50. Disposed in the water granulating tank 50 is a water granulating conveyor 51 composed of a water cooling type conveyor that conveys water granulated slag stored in the water granulating tank 50. Disposed on the discharge side of the water granulating conveyor 51 is a roll crusher 52 that crushes water granulated slag to grains having diameters of around 50 µm to 2 mm. Disposed downstream of the roll crusher 52 is a slag conveyer 53 composed of a case conveyer. Disposed downstream of the slag conveyer 53 is a slag storage yard 54.

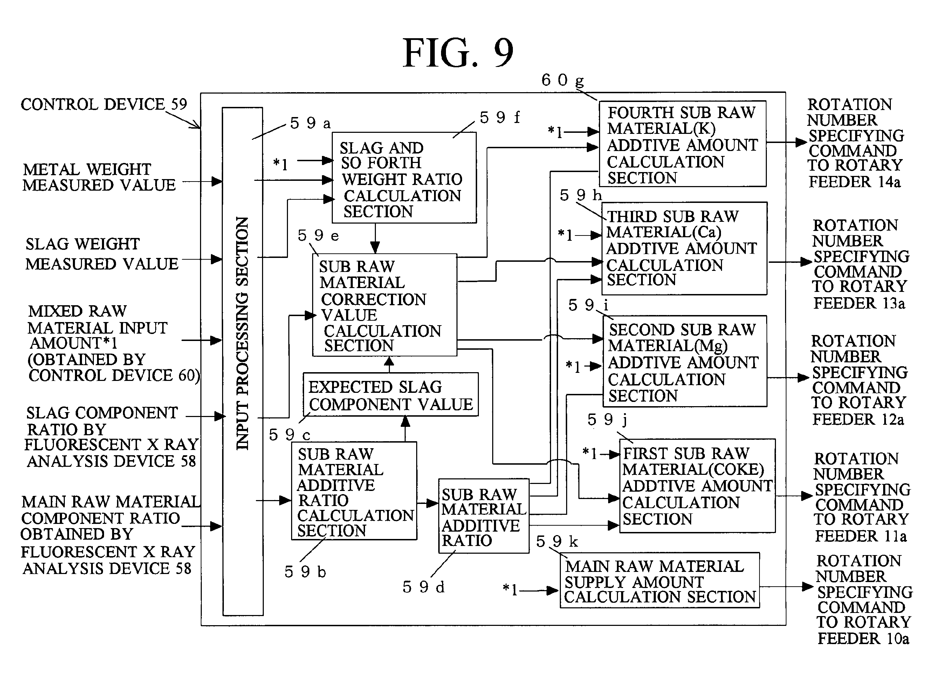

As shown in Fig. 1 and Fig. 2, disposed below the metal discharge opening 30 of the furnace body 21 is a container 55 that stores molten metals.
As shown in Fig. 1, disposed on the outer circumference of the furnace body 21 is a nozzle 56 that sprays cooling water. The nozzle 56 is in communication with a furnace body cooling pump 57 that discharges sand filtered water.
Next, with reference to Fig. 9, a control device 59 that controls the feeding amounts of the main raw material and sub raw materials will be described.

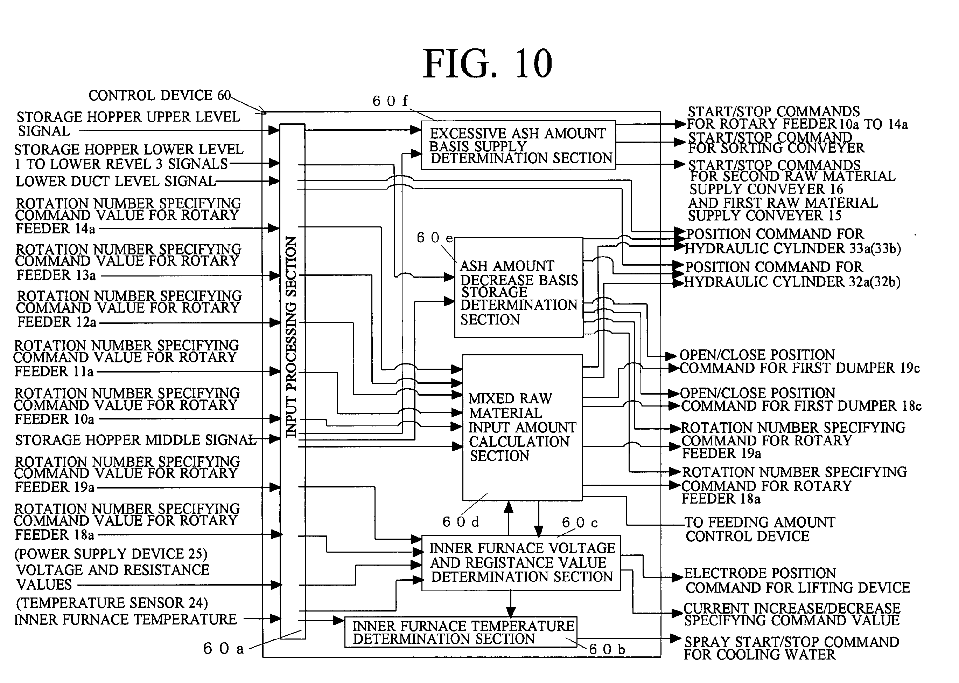

The control device 59 is structured such that based on the composition ratio of the main raw material that has been obtained by the fluorescent X ray analysis device 58 and input from an input processing section 59a, a sub raw material additive ratio calculation section 59b calculates a sub raw material additive ratio 59d and an expected slag component value 59c and outputs them.
The control device 59 is also structured such that based on a measured slag weight value, a measured metal weight value, and a mixed raw material input amount that have been (obtained by a control device 60 shown in Fig. 10 and) input from the input processing section 59a, a slag and so forth weight ratio calculation section 59f calculates the weight ratio of input amounts of slag and metals.

The control device 59 is also structured such that based on the slag component ratio that has been calculated by the fluorescent X ray analysis device 58 and input from the input processing section 59a, the expected slag component value 59c obtained by the sub raw material additive ratio calculation section 59b, and the weight ratio of the input amounts of slag and metals obtained by the slag and so forth weight ratio calculation section 59f, a sub raw material additive ratio correction value calculation section 59e calculates a correction value of the additive ratio of the sub raw materials and outputs it.
The control device 59 is also structured such that based on a mixed raw material input amount that has been (obtained by the control device 60 shown in Fig. 10 and) input from the input processing section 59a, a main raw material supply amount calculation section 59k calculates the supply amount of the main raw material and outputs a rotation number specifying command to the rotary feeder 10a corresponding to the calculated result.

The control device 59 is also structured such that based on the mixed raw material input amount that has been (obtained by the control device 60 shown in Fig. 10 and) input from the input processing section 59a, the sub raw material additive ratio 59d obtained by the sub raw material additive ratio calculation section 59b, and the sub raw material additive ratio correction value obtained by the sub raw material additive ratio correction value calculation section 59e, a first sub raw material (coke) additive amount calculation section 59j calculates the additive amount of the first sub raw material and outputs a rotation number specifying command to the rotary feeder 11 a corresponding to the calculated result.

The control device 59 is also structured such that based on the mixed raw material input amount that has been (obtained by the control device 60 shown in Fig. 10 and) input from the input processing section 59a, the sub raw material additive ratio 59d obtained by the sub raw material additive ratio calculation section 59b, and the sub raw material additive ratio correction value obtained by the sub raw material additive ratio correction value calculation section 59e, a second sub raw material (Mg) additive amount calculation section 59j calculates the additive amount of the second sub raw material and outputs a rotation number specifying command to the rotary feeder 12a corresponding to the calculated result.

The control device 59 is also structured such that based on the mixed raw material input amount that has been (obtained by the control device 60 shown in Fig. 10 and) input from the input processing section 59a, the sub raw material additive ratio 59d obtained by the sub raw material additive ratio calculation section 59b, and the sub raw material additive ratio correction value obtained by the sub raw material additive ratio correction value calculation section 59e, a third sub raw material (Ca) additive amount calculation section 59h calculates the additive amount of the second sub raw material and outputs a rotation number specifying command to the rotary feeder 13a corresponding to the calculated result.

The control device 59 is also structured such that based on the mixed raw material input amount that has been (obtained by the control device 60 shown in Fig. 1 0 and) input from the input processing section 59a, the sub raw material additive ratio 59d obtained by the sub raw material additive ratio calculation section 59b, and the sub raw material additive ratio correction value obtained by the sub raw material additive ratio correction value calculation section 59e, a fourth sub raw material (K) additive amount calculation section 59j calculates the additive amount of the second sub raw material and outputs a rotation number specifying command to the rotary feeder 14a corresponding to the calculated result.

Next, with reference to Fig. 10, the control device 60 that controls the supply of the raw materials and the operation of the electric resistance melting furnace 20 will be described.
The control device 60 is structured such that based on inner furnace temperature information that has been obtained by the temperature sensor 24 disposed on the wall of the furnace body 21 and input from an input processing section 60a, voltage and resistance value information obtained from the power supply device 25, the mixed raw material input amount obtained by a mixed raw material input amount calculation section 60d, and the rotation number specifying command values supplied to the rotary feeders 18a and 18b, an inner furnace voltage and resistance value determination section 60c calculates the voltage and resistance values and outputs electrode 23 up/down commands to the lifting device 31 of the electrode 23 corresponding to the calculated result. In addition, the control device 60 is structured such that based on these the inner furnace voltage and resistance value determination section 60c calculates the voltage and resistance values and outputs a power (current) increase command or a power (current) decrease command to the power supply device 25 of the furnace body 21 corresponding to the calculated result. For example, the power is supplied such that the inner furnace temperature is kept at 1400 °C and the input amount of the raw materials becomes 1.0 to 1.5 kW·h/kg.

The control device 60 is also structured such that based on the inner furnace temperature information that has been obtained by the temperature sensor disposed on the wall of the furnace body 21 and input from the input processing section 60a and the voltage and resistance value information obtained by the inner furnace voltage and resistance value determination section 60c, an inner furnace temperature determination section 60b calculates the inner furnace temperature and outputs a start/stop command for the furnace body cooling pump 57 that delivers cooling water sprayed to the outer circumference of the furnace body corresponding to the calculated result.
The control device 60 is also structured such that based on the rotation number specifying commands that have been obtained for the rotary feeders 10a to 1 4a and input from the input processing section 60a and the information obtained from the inner furnace voltage and resistance value determination section 60c, the mixed raw material input amount calculation section 60d calculates the mixed raw material input amount, controls the rotary feeders 18a and 19a, the first dumper 18c, and the second dumper 19c, the positions of the hydraulic cylinders of the first push type raw material supply device 32 and the second push type raw material supply device 33, and the raw material input amounts corresponding to the calculated result.

Next, incineration ash containing a phosphor component, used in this embodiment, will be described.
Incineration ash containing a phosphor component is produced for example in the following manner.
A ferrous flocculating agent is added to sewage water stored in an aeration tank. Thereafter, the resultant sewage water is for example stirred or aerated such that a phosphor component contained in the sewage water is precipitated. The precipitate and sludge that is precipitated at the bottom of the aeration tank are recovered and dehydrated by a proper means such as a centrifugal dehydrator or a belt press dehydrator. As a result, dehydrated sludge is obtained. The dehydrated sludge is incinerated at a temperature of around 800 °C. As a result, incineration ash of sludge is obtained.

Thus, the concentration of a phosphor component that resides in treated water with which sewage water has been purified is decreased. In addition, a phosphor component contained in sewage water is migrated to dehydrated sludge. As a result, the concentration of a phosphor component contained in incineration ash of sludge is increased.
Next, the basis on which the apparatus is operated at a temperature of around 1400 °C such that a phosphor component is prevented from evaporating will be described.

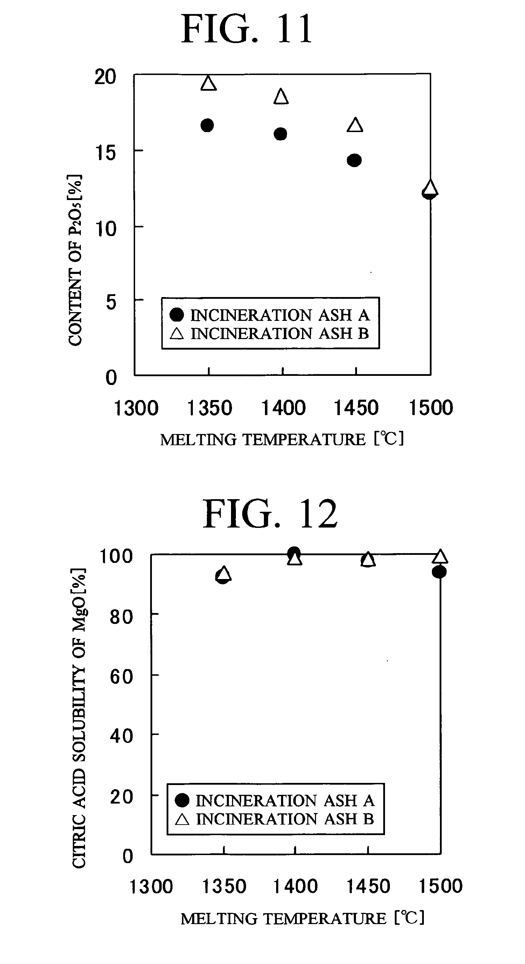

The inventors of the present invention conducted an experiment about the relationship between a melting temperature and evaporation of a phosphor component. The experiment was conducted in the conditions that a melting pot was used, the melting time was 20 minutes, and the mole ratio of each of MgO/P₂O₅ and CaO/P₂O₅ was 3.5. Fig. 11 and Fig. 1 2 show the results of the experiment.
Next, incineration ashes A and B used in this experiment will be described.
The main components of incineration ashes A and B are listed in Table 1. The components of incineration ash of sewage water fluctuate region by region and season by season because the sewage water treatment system and regional lives vary. Incineration ashes A and B were collected from different treatment sites. The concentration of P₂O₅ of incineration ash A was normal, whereas that of incineration ash B was higher than normal. In addition, since incineration ash A contains much Fe₂O₅, the treatment site of incineration ash A used a ferrous flocculating agent.

Fig. 11 shows the relationship between a melting temperature and the content of P₂O₅ (%). As is clear from Fig. 11, a decrease of the content of P₂O₅ (%) at a melting temperature in the range from 1350 to 1450 °C is smaller than that at a melting temperature of 1500 °C. When the melting temperature is lower than 1350 °C, a sufficient melting state cannot be obtained.
Fig. 12 shows the relationship between a melting temperature and citric acid solubility (%) of MgO. It is clear from Fig. 12 that when the melting temperature was in the range from 1350 to 1 500 °C, a value that nearly satisfies citric acid solubility (%) of MgO was obtained.

From the results shown in Fig. 11 representing the relationship between a melting temperature and the content of P₂O₅ (%) and Fig. 12 representing the relationship between a melting temperature and citric acid solubility (%) of MgO, it became clear that it is preferred that the melting temperature be in the range from 1350 to 1450 °C because the content (%) of P₂O₅ at a melting temperature in the range from 1350 to 1450 °C is superior to that at a melting temperature of 1 500 °C.

**[Table 1]**

| | MgO | Al₂O₃ | SiO₂ | P₂O₅ | K₂O | CaO | Fe₂O₃ |
|---|---|---|---|---|---|---|---|
| | % | | | | | | |
| incineration ash A | 2.62 | 20.66 | 27.46 | 22.31 | 2.46 | 13.11 | 8.88 |
| incineration ash B | 3.07 | 17.34 | 32.15 5 | 27.50 | 2.28 | 11.78 | 2.39 |

Next, the basis on which the mole ratio of phosphorus pentoxide, magnesium oxide, and calcium oxide contained in recovered slag is 1 : 1.5 to 6 : 1.5 to 6 will be described. Table 2 lists main components of incineration ashes C and D.
The mole ratio was decided such that the ratio of citric acid solubility of P₂O₅ (citric acid solubility ratio) became 90 % or higher. Since the citric acid solubility is a property of which a substance is soluble in a 2 % solution of citric acid and is a plant's absorbing property, it can be used as an index that represents the product quality of a fertilizer.

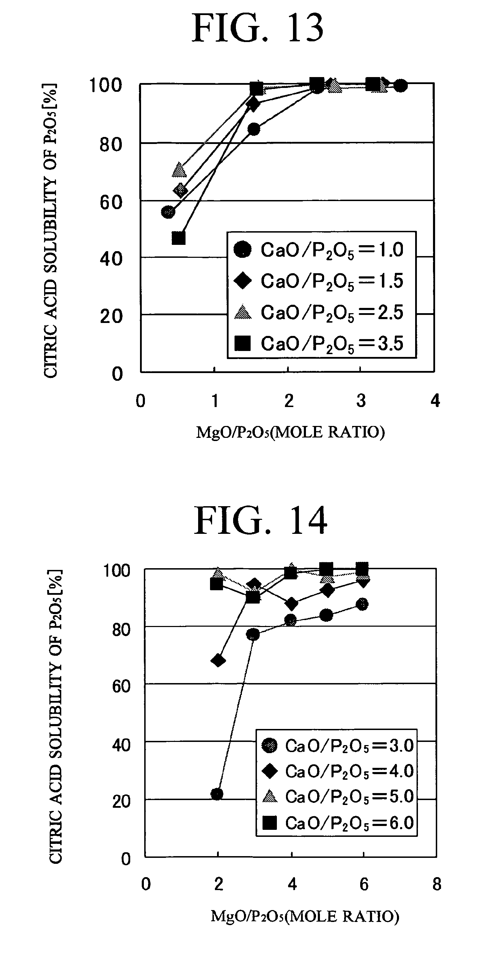

The experiment shows that in incineration ash whose P₂O₅ content was high such as incineration ash C, as shown in Fig. 13, when the mole ratio of each of MgO/P₂O₅ and CaO/P₂O₅ is 1.5 or higher, the citric acid solubility ratio became 90 % or higher and that in incineration ash whose P₂O₅ content was low, as shown in Fig. 14, when the mole ratio of each of MgO/P₂O₅ and CaO/P₂O₅ was 5.0 to 6.0 or higher, the citric acid solubility ratio became 90 % or higher. Thus, the mole ratio was specified as 1.5 to 6.0.

**[Table 2]**

| | MgO | Al₂O₃ | SiO₂ | P₂O₅ | K₂O | CaO | Fe₂O₃ |
|---|---|---|---|---|---|---|---|
| | % | | | | | | |
| incineration ash C | 3.35 | 18.48 | 31.25 | 28.23 | 3.00 | 11.70 | 2.94 |
| incineration ash D | 3.15 | 15.08 | 37.22 | 16.00 | 2.17 | 10.58 | 8.24 |

Next, the operation of the phosphatic fertilizer producing apparatus 1 according to this embodiment will be described.
Step of supply of raw materials:
First, incineration ash containing a phosphor component is stored in the main raw material hopper 10. A reducing agent made of coke is stored in the first sub raw material hopper 11. A magnesium component is stored in the second sub raw material hopper 12. A calcium component is stored in the third sub raw material hopper 1 3. A potassium component is stored in the fourth sub raw material hopper 14.

Next, based on pre-measured data of the content of phosphor per unit weight of incineration ash containing a phosphor component, the rotary feeders 10a, 11a, 12a, 13a, and 14a are controlled to be opened and closed such that the mole ratio of phosphorus pentoxide, magnesium oxide, and calcium oxide contained in recovered slag becomes 1 : 1.5 to 6 : 1.5 to 6 and the amounts of magnesium oxide and calcium oxide to incineration ash containing a phosphor component are obtained.

Step of supply of raw materials to electric resistance melting furnace:
Next, incineration ash containing a phosphor component with a predetermined additive ratio, magnesium oxide, calcium oxide, and coke (hereinafter they are referred to as raw materials) are supplied to the sorting conveyor 17 through the first raw material supply conveyor 1 5 and the second raw material supply conveyor 16. The raw materials are equally placed into the first storage hopper 18 and the second storage hopper 19.

Next, as shown in Fig. 10, the control device 60 commands the rotary feeders 18a and 19a, which are disposed below the first storage hopper 18 and the second storage hopper 19, the first dumper 18c, the second dumper 19c, the first push type raw material supply device 32, and the second push type raw material supply device 33 to continuously supply the raw materials to the electric resistance melting furnace 20. Next, with reference to Fig. 8 to Fig. 10, these operations will be specifically described.

In the control device 60, an excessive ash amount basis supply restriction determination section 60f calculates the supply amounts of the raw materials based on position information of the up position level sensor a and the middle position level sensor b such that the first storage hopper 18 and the second storage hopper 19 do not overflow with the raw materials. When the raw materials have increased and come to the position of the up position level sensor a, the control device 60 issues a stop command to the first raw material supply conveyor 1 5, the second raw material supply conveyor 16, and the rotary feeders 10a to 14a disposed upstream of the first storage hopper 1 8 and the second storage hopper 19. When the raw materials have decreased and come to the position of the middle position level sensor b, the control device 60 issues a resume command that cause them to resume the supply of the raw materials.

When the raw materials stored in the first storage hopper 18 and the second storage hopper 19 have run out, since the rotary feeders 18a and 19a are not sealed by the raw materials, the reducing atmosphere of the electric resistance melting furnace 20 is adversely affected. Thus, based on the position information of the middle position level sensor c and the lower position level sensors d to f, an ash amount decrease basis storage determination section 60e of the control device 60 calculates the amount of the raw materials. When the raw materials have decreased to the position of the lower position level sensor d, the control device 60 commands the rotary feeders 18a and 19a to decrease their rotation numbers. When the row materials have been supplied and they have come to the position of the middle position level sensor c, the control device 60 commands the rotary feeders 1 8a and 1 9a to restore their original rotation numbers. When the raw materials have decreased and come to the position of the lower position level sensor e, the control device 60 commands the rotary feeders 1 8a and 19a to further decrease their rotation numbers. When the raw materials have been supplied and they have come to the position of the lower position level sensor d, the control device 60 commands the rotary feeders 18a and 19a to restore their rotation numbers. When the raw materials have decreased and come to the position of the lower position level sensor f, the control device 60 issues a stop command and a close command to the rotary feeder 1 8a and 19a, the first dumper 1 8c, the second dumper 19c, the hydraulic cylinder 32a, and the hydraulic cylinder 33a. When the raw materials have increased and come to the position of the lower position level sensor d, the control device 60 issues a raw material supply resume command to the rotary feeders 18a and 19a, the first dumper 1 8c, the second dumper 19c, the hydraulic cylinder 32a, and the hydraulic cylinder 33a.

Next, as shown in Fig. 10, the control device 60 issues an open command to the first dumper 18c and the second dumper 19c corresponding to the calculated result of the mixed raw material input amount calculation section 60d. Based on the rotation number specifying command values of the rotary feeders 10a to 14a, the signal from the middle position level sensor b, the component ratio of the main raw material (as a signal), and the component ratio of the first sub raw material to the fourth sub raw material (as a manual input), the control device 60 commands the rotary feeders 18a and 19a to rotate corresponding to the calculated result of the mixed raw material input amount calculation section 60d such that as shown in Fig. 4, while the rotary feeders 1 8a and 1 9a are kept in a reducing atmosphere, the raw materials fall on the pistons 32b and 33b of the first push type raw material supply device 32 and the second push type raw material supply device 33. Since the rotary feeders 18a and 19a prevent air from flowing upward and downward, they can supply the raw materials while a reducing atmosphere is kept. Thus, by controlling the rotation numbers of the rotary feeders 1 8a and 19a, they can quantitatively supply the raw materials.

As shown in Fig. 6(b), the lower ducts 18b and 19b are provided with level sensors 18b' and 1 9b' such that when the pistons 32b and 33b have been retracted and the raw materials have dropped onto the cylinders 32c and 33c, the raw materials seal the lower ducts 18b and 19b. When the rotary feeders 18a and 19a have supplied the raw materials to the positions of the level sensors 1 8b' and 1 9b', as shown in Fig. 10, the control device 60 commands the first push type raw material supply device 32 and the second push type raw material supply device 33 to retract the pistons 32b and 33b of the hydraulic cylinders 32a and 33a as shown in Fig. 6(b) corresponding to the calculated result of the mixed raw material input amount calculation section 61 d such that the raw materials fall in the cylinders 32c and 33c from which the piston 32b and 33a have been retracted. Next, as shown in Fig. 8, the control device 60 commands the hydraulic cylinders 32a and 33a to extend the pistons 32b and 33b as shown in Fig. 6(c) corresponding to the calculated result of the mixed raw material input amount calculation section 60d such that the raw materials in the cylinders 32 and 33c are pushed into the electric resistance melting furnace 20 through the raw material input openings 26 and 27, respectively.

When the rotary feeders 18a and 19a have supplied the raw materials to the positions of the level sensors 18b' and 19b', the operation of which the raw materials on the pistons 32b and 33b are pushed into the electric resistance melting furnace 20 through the raw material input openings 26 and 27 is repeatedly performed. After the raw materials have been supplied, the control device 60 commands the first dumper 18c and the second dumper 19c to close the lower ducts 18b and 19b, respectively.

Step of operation of electric resistance melting furnace:
As shown in Fig. 10, the temperature sensor 24 continuously detects the inner temperature of the electric resistance melting furnace 20 and inputs the detected temperature to the inner furnace temperature determination section 60b of the control device 60. When the detected temperature becomes lower than a reference value 1400 °C, the control device 60 commands the power supply device 25 of the electric resistance melting furnace 20 to increase the current (increase the power). In contrast, when the detected temperature becomes higher than the reference value 1400 °C, the control device 60 commands the power supply device 25 of the electric resistance melting furnace 20 to decrease the current (decrease the power).

In addition, as shown in Fig. 10, the inner furnace voltage and resistance value determination section 60c of the control device 60 usually monitors the voltage and resistance value information of the power supply device 25 of the electric resistance melting furnace 20. When the voltage and resistance values have decreased, the control device 60 commands the lifting device 31 of the electrode 23 to raise the electrode 23. In contrast, when the voltage and resistance values have increased, the control device 60 commands the lifting device 31 of the electrode 23 to lower the electrode 23 (see Fig. 5).
Next, in the electric resistance melting furnace 20, a current is caused to flow to the electrodes 22 and 23 through the materials supplied to the melting space such that the raw materials are heated and melted by Joule heat and the melting space is kept in a reducing atmosphere by carbon, which is a main component of coke. In this embodiment, the amount of coke is 5 weight % or less of all the materials supplied to the melting space of the furnace body 21 (to be adjusted on the basis of the content of iron contained in incineration ash of sludge). The amount of potassium oxide is several weight % of all the materials supplied to the melting space of the furnace body 21.

By supplying coke to the melting space of the furnace body 21, wear-out of the lining and the electrode 23 can be suppressed.
As shown in Fig. 2, when incineration ash of sludge, magnesium oxide, calcium oxide, and potassium oxide have been melted, due to the difference of specific gravities of metals and non-metals, a layer of molten metals 20a mainly composed of various types of metals such as iron, nickel, and chromium contained in incineration ash of sludge and an iron component of a ferrous flocculating agent is formed on the inner bottom side of the melting space. In contrast, a layer of molten slag 20b mainly composed of phosphorus pentoxide (P₂O₅), magnesium oxide, calcium oxide, potassium oxide, and silicon oxide (SiO) contained in incineration ash of sludge and magnesium oxide, calcium oxide, and potassium oxide added as raw materials is formed above the layer of the molten metals 20a. As a result, the molten metals 20a and the molten slag 20b coexist in a two-liquid separated phase.

An experiment shows that since potassium has been added to the molten slag 20b, the melting temperature of the molten slag 20b is lower by 50 °C or more than that of slag to which potassium has not been added.
Thus, by adding potassium to slag, the power supplied to the electrodes 22 and 23 that heat materials placed in the melting space of the furnace body 21 can be decreased.

Harmful substances such as lead, zinc, arsenic, and/or cadmium contained in incineration ash of sludge are trapped by the melting furnace bag filter 37 through the gas discharge opening 28 and the secondary combustion furnace 34. The trapped harmful substances are conveyed by the dust conveyor 40 to the dust humidifying device 42 through the dust hopper 41. The dust humidifying device 42 causes the harmful substances to become harmless.
Step of treatment of molten slag:
The molten slag 20b in the electric resistance melting furnace 20 is discharged to the water granulating slope 48 through the slag discharge opening 29 while water flows on the water granulating slope 48. Namely, a water granulating treatment that quenches the molten slag 20b with water is performed. The granulated slag is stored in the water granulating tank 50. The granulated slag stored in the water granulating tank 50 is conveyed by the water granulating conveyor 51 to the roll crusher 52 while the granulated slag is being dehydrated by the water granulating conveyor 51. After the slag has been crushed to grains having diameters of around 50 µm to 2 mm, they are conveyed to the slag storage yard 54 through the slag conveyer 53.

When slag has been water-granulated, a phosphor component can be dissolved by citric acid. When slag has not been sufficiently quenched, fluorine apatite and so forth precipitate, causing the citric acid solubility to lower. Phosphoric acid having citric acid solubility is solved and absorbed by roots of plants. Thus, phosphoric acid having citric acid solubility is not sufficiently effective at the begging of fertilizing. However, phosphoric acid having citric acid solubility can prolong the fertilizing effect. In addition, phosphoric acid having citric acid solubility is not lost by rain water. Moreover, phosphoric acid having citric acid solubility does not become an unavailable form in such a way that it combines with aluminum and/or iron that is present in the soil. Thus, it is important to cause a phosphor component contained in fertilizers to have citric acid solubility because they metabolize energy, synthesize substances, and prevent the soil from losing phosphor for a long time. The molten slag quenched in the water granulating tank 50 becomes glasslike grains.

Since this slag is solidified slag of the molten slag 20b containing phosphorus pentoxide, magnesium oxide, calcium oxide, potassium oxide, and silicic acid, it facilitates the same fertilizing effect as a phosphorous fertilizer made from phosphate rock as a raw material.
In addition, since various types of metals and an iron component of a ferrous flocculating agent contained in incineration ash of sludge are contained in the molten metals 20a, the slag that is fertilized does not contaminate the soil.

Step of recovery of molten metals:
The molten metals 20a in the electric resistance melting furnace 20 are discharged to the exterior of the furnace body 21 through the metal discharge opening 30. The molten metals 20a are naturally solidified as metals in a container 55. These metals are mainly phosphor and iron. Thus, they can be used in the form of as a phosphor additive for steelmaking.

### (Second embodiment)

Fig. 15 to Fig. 17 are schematic diagrams describing an outline of a phosphatic fertilizer producing apparatus according to a second embodiment of the present invention.

A phosphatic fertilizer producing apparatus 1 A of this embodiment is different from the phosphatic fertilizer producing apparatus 1 of the first embodiment in that a third dumper 19e is disposed downstream of the second raw material supply conveyor 16 and that the second raw material supply conveyor 16 is a flight conveyer.
Next, with reference to Fig. 15 to Fig. 17, the differences between the phosphatic fertilizer producing apparatus 1A and the phosphatic fertilizer producing apparatus 1 will be described.
Disposed downstream of the second raw material supply conveyor 1 6 are a first furnace overhead storage hopper 18 having level sensors a to f used therefor and a second furnace overhead storage hopper 19 having level sensors a to f used therefor through upper ducts 18d and 19d, respectively. Disposed in the upper duct 19d is a third dumper 19e.

Disposed below the first furnace overhead storage hopper 1 8 is a rotary feeder 18a that quantitatively feeds a mixed raw material of a main raw material and sub raw materials. Disposed below the second furnace overhead storage hopper 19 is a rotary feeder 19a that feeds the mixed raw material of the main raw material and the sub raw materials.
Disposed downstream of the first furnace overhead storage hopper 18 is a lower duct 18b having a first dumper 18c. Disposed below the second furnace overhead storage hopper 19 is a lower duct 1 9b having a second dumper 19c.

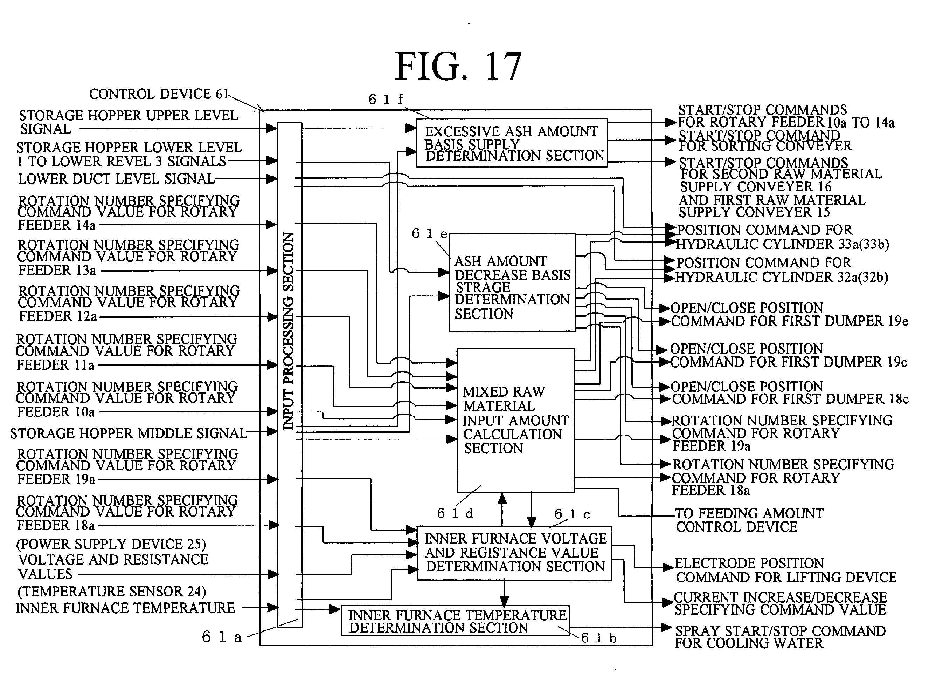

The lower duct 1 8b is in communication with a first push type raw material supply device 32 disposed at a raw material input opening 26 of an electric resistance melting furnace 20. The lower duct 19b is in communication with a second push type raw material supply device 33 disposed at a raw material input opening 27 of the electric resistance melting furnace 20.
The structure downstream of the electric resistance melting furnace 20 in this embodiment is the same as that in the first embodiment.
As shown in Fig. 17, a control device 61 that controls the supply of raw materials and the operation of the electric resistance melting furnace 20 is the same as the control device 60 shown in Fig. 10 except for an open/close command for the third dumper 19e. In other words, based on the input raw material amount detected by the level sensors a to f of the first furnace overhead storage hopper 18 and the input raw material amount detected by the level sensors a to f of the second furnace overhead storage hopper 19, the control device 61 controls the operations of the rotary feeder 1 8a, the rotary feeder 19a, the first dumper 18c, the second dumper 19c, the third dumper 19e, the first push type raw material supply device 32, and the second push type raw material supply device 33 so as to control the input amounts of the raw materials.

Next, the operation of the phosphatic fertilizer producing apparatus 1A according to this embodiment will be described.
The step of the supply of raw materials of this embodiment is the same as that of the first embodiment.
Step of supply of raw materials to electric resistance melting furnace:
Next, incineration ash containing a phosphor component, magnesium oxide, calcium oxide, and coke that have been added at a predetermined additive ratio (hereinafter these materials are referred to as raw materials) are supplied to the electric resistance melting furnace through the first raw material supply conveyor 1 5 and the second raw material supply conveyor 16. At this point, since the third dumper 19e has been closed, the raw materials on the second raw material supply conveyor 16, which is a flight conveyer, are placed into the first storage hopper 1 8. When the amount of the raw materials placed into the first storage hopper 18 has reached a predetermined amount, the level sensors a to f of the first storage hopper 18 inform the control device 61 of that. The control device 61 commands the third dumper 19e to switch the supply of the raw materials. Thus, the raw materials are placed into the second storage hopper 19.

Next, the control device 61 commands the rotary feeders 18a and 19a, the first dumper 18c, the second dumper 19c, the first push type raw material supply device 32, and second push type raw material supply device 33 disposed below the first storage hopper 18 and the second storage hopper 19 to operate such that the raw materials are continuously supplied to the electric resistance melting furnace 20.
Next, these operations will be specifically described.

In the first storage hopper 18, the control device 61 commands the first dumper 18c to open and the rotary feeder 18a disposed below the first storage hopper 18 to rotate while a reducing atmosphere is kept such that the raw materials fall on the piston 32b of the first push type raw material supply device 32. Since the rotary feeder 18a prevents air from flowing upward and downward, the raw materials can be supplied while a reducing atmosphere is kept. Thus, by controlling the rotation number of the rotary feeder 1 8a, it can quantitatively supply the raw materials.

Next, the control device 61 commands the first push type raw material supply device 32 to retract the piston 32b of the hydraulic cylinder 32a and to cause the raw materials to fall in the cylinder 32c from which the piston 32b has been retracted. Next, the control device 61 commands the first push type raw material supply device 32 to extend the hydraulic cylinder 32a such that the hydraulic cylinder 32a pushes the raw materials placed in the cylinder 32c to the electric resistance melting furnace 20 through the raw material input opening 26.
Since the rotary feeder 18a has rotated and caused the raw materials to quantitatively fall on the piston 32b of the first push type raw material supply device 32 while a reducing atmosphere is kept, after a predetermined time has elapsed, the operation that causes the raw materials for a predetermined amount to be pushed into the electric resistance melting furnace 20 through the raw material input opening 26 is repeated in the foregoing manner. After the raw materials have been supplied, the control device 61 commands the first dumper 18c to close the lower duct 18b. The first dumper 1 8c closes the lower duct 18b.

The second storage hopper 19 is operated while the first storage hopper 18 is being operated.
In the second storage hopper 19, the control device 60 commands the second dumper 19c to open and the rotary feeder 19a disposed below the second storage hopper 19 to rotate while a reducing atmosphere is kept such that the rotary feeder 1 9a causes the raw materials to fall on the piston 33b of the second push type raw material supply device 33. The rotary feeder 19a can supply the raw materials while a reducing atmosphere is kept. Thus, by controlling the rotation number of the rotary feeder 19a, it can quantitatively supply the raw materials.

Next, the control device 61 commands the second push type raw material supply device 33 to retract the piston 33b of the hydraulic cylinder 33a such that the raw materials fall in the cylinder 33c from which the piston 33b has been retracted. Next, the control device 61 commands the second push type raw material supply device 33 to extend the hydraulic cylinder 33a such that it pushes the raw materials placed in the cylinder 33c to the electric resistance melting furnace 20 through the raw material input opening 27.
Since the rotary feeder 19a has rotated and caused the raw materials to quantitatively fall on the piston 33b of the second push type raw material supply device 33 while a reducing atmosphere is kept, after a predetermined time has elapsed, the operation of which the raw materials are quantitatively pushed into the electric resistance melting furnace 20 through the raw material input opening 27 is repeatedly performed in the foregoing manner.

After the raw materials have been supplied, the control device 61 commands the second dumper 19c to close the lower duct 19b. The second dumper 19c closes the lower duct 18b.
During this operation, based on information obtained from the level sensors a to f disposed in the first storage hopper 18 and information obtained from the level sensors a to f disposed in the second storage hopper 19, the control device 61 causes the third dumper 19e to be opened or closed such that the raw materials are properly distributed to the first storage hopper 1 8 and the second storage hopper 1 9.

The step of the operation of the electric resistance melting furnace, the step of the treatment of molten slag, and the step of recovery of molten metals are performed in the same manner as those of the first embodiment.

### (Other embodiments)

About a device that supplies the raw materials to the electric resistance melting furnace 20:
In the phosphatic fertilizer producing apparatus 1 of the first embodiment of the present invention and the phosphatic fertilizer producing apparatus 1A of the second embodiment of the present invention, the first push type raw material supply device 32 and the second push type raw material supply device 33 are used as raw material supply devices. However, according to the present invention, a screw type raw material supply device 70 shown in Fig. 18 and/or a dumper type raw material supply device 75 may be used.

The screw type raw material supply device 70 shown in Fig. 18 is composed of a hopper 71, which corresponds to the first storage hopper 18 and the second storage hopper 19, and a screw type conveyer 72 disposed below the hopper 71. The downstream side of the screw type conveyer 72 is in communication with raw material input openings 26 and 27 of the electric resistance melting furnace 20.
In the screw type raw material supply device 70, raw materials are densely placed between the hopper 71 and the screw type conveyer 72, the electric resistance melting furnace 20 is not in communication with the atmospheric side. Thus, the reducing atmosphere in the electric resistance melting furnace 20 is not adversely affected. In addition, since the raw materials can be continuously supplied, when for example two or more screw type raw material supply devices 70 are disposed, a large amount of raw materials can be continuously supplied.

The dumper type raw material supply device 75 shown in Fig. 19 is composed of a hopper 76, which corresponds to the first storage hopper 18 and the second storage hopper 19, a raw material supply section 77 disposed below the hopper 76, and a chute 78 disposed below the raw material supply section 77. The raw material supply section 77 is composed of two perforated plates 77a and 77b and dumpers 77c and 77d disposed below the two perforated plates 77a and 77b. The chute 78 is in communication with the raw material input openings 26 and 27 of the electric resistance melting furnace 20.

As shown in Fig. 9(a), the dumper type raw material supply device 75 supplies the raw materials into the hopper 76 in the state that the two dumpers 77c and 77d have been closed. At this point, the interior of the electric resistance melting furnace 20 is not in communication with the atmospheric side. Thus, the reducing atmosphere in the electric resistance melting furnace 20 is not adversely affected. Next, as shown in Fig. 19(b), the upper dumper 77c is opened such that the raw materials fall on the lower perforated plate 77b and the dumper 77d. At this point, since the lower dumper 77d closes the passage, the interior of the electric resistance melting furnace 20 is not in communication with the atmospheric side. Thus, the reducing atmosphere in the electric resistance melting furnace 20 is not adversely affected. Next, as shown in Fig. 19(c), after the dumper 77c is closed, the dumper 77d is opened such that the raw materials on the lower perforated plate 77b and the dumper 77d fall in the chute 78. At this point, since the upper dumper 77c closes the passage, the interior of the electric resistance melting furnace 20 is not in communication with the atmospheric side. Thus, the reducing atmosphere in the electric resistance melting furnace 20 is not adversely affected. Next, as shown in Fig. 19(d), the dumper 77d is closed in the original state (see Fig. 19(a)).

Generation of molten slag that flows from electric resistance melting furnace:
In the phosphatic fertilizer producing apparatus 1 according to the first embodiment of the present invention and the phosphatic fertilizer producing apparatus 1 A according to the second embodiment of the present invention, the semicircular shaped water granulating slope 48 that causes molten slag to flow downward is disposed downstream of the slag discharge opening 29 of the furnace body 21 and the water granulating tank 50 stores the molten slag. It should be notated that the present invention is not limited to such a structure. Instead, a pump type molten slag cooling device 80 shown in Fig. 20 and/or an air cooling type molten slag cooling device 86 shown in Fig. 21 may be used.

The pump type molten slag cooling device 80 shown in Fig. 20 is composed of a water granulating tank 81 in which molten slag falls, a pump 82 that delivers water granulated slag from the water granulating tank 81 together with water, a filter device 83 that receives water and water granulated slag delivered by the pump 82 and that dehydrates water granulated slag with a wire mesh 84 disposed around the filter device 83, and a water tank 85 into which the filter device 83 is installed.
In the pump type molten slag cooling device 80, when molten slag falls in the water granulating tank 81, the water granulating treatment is performed for molten slag by quenching it by water. The granulated slag precipitates in the water granulating tank 81. The precipitated water granulated slag is delivered to the filter device 83 by the pump 82, filtered by the wire mesh 84, and then deposited in the filter device 83. When a predetermined amount of water granulated slag has been deposited in the filter device 83, the water granulated slag is conveyed to the roll crusher 52. The roll crusher 52 crushes the water granulated slag to grains having diameters of around 50 µm to 2 mm.

The air cooling type molten slag cooling device 86 shown in Fig. 21 is composed of a conveyor 87 having a plurality of containers 88 that receive molten slag, a cooling fan 89 disposed around the conveyor 87, and a conveyor 90 that conveys slag, which has fallen from the conveyor 87, to the roll crusher 52.
In the air cooling type molten slag cooling device 86, molten slag falls in the containers 88. The molten slag is air-quenched and granulated by the cooling fan 89. Thereafter, the granulated slag is transferred from the conveyor 87 to the conveyor 90 and then conveyed to the roll crusher 52. The roll crusher 52 crushes the granulated slag to grains having diameters of about 50 µm to 2 mm.

### INDUSTRIAL APPLICABILITY

According to the present invention, natural resources highly contained in sludge that collaterally occurs in a sewage treatment and in incineration ash of municipal waste and industrial waste can be effectively used.
In addition, according to the present invention, sludge that collaterally occurs in a sewage treatment and incineration ash of municipal waste and industrial waste can be recycled.
In addition, according to the present invention, a volume reducing treatment for sea shells of for example scallops and oysters, egg shells in food processes of chicken eggs, and the like that are disposed of at final disposal sites can be further facilitated.

## Claims

1. A process which produces a phosphatic fertilizer, comprising the steps of:
continuously supplying a raw material composed of sludge or incineration ash containing a phosphor component and a reducing agent or a raw material composed of sludge or incineration ash containing the phosphor component, the reducing agent, and at least one of a magnesium component, a calcium component, a potassium component, and calcium-containing waste into a melting furnace which is kept in a reducing atmosphere while an interior of said melting furnace is kept in a sealed state such that the reducing atmosphere is kept in said melting furnace;
keeping an inner temperature of said melting furnace at around 1400 °C, heating said raw material while suppressing evaporation of said phosphor component, and causing molten metals and molten slag to coexist in said melting furnace in a two-liquid separated phase;
quenching molten slag which flows from said melting furnace; and
crushing said quenched molten slag to grains having diameters of 50 µm to 2 mm.

2. The process which produces the phosphatic fertilizer according to claim 1, further comprising the steps of:
continuously measuring components of part of said main raw material with a fluorescent X analysis device, calculating additive amounts of sub raw materials based on measured values of said fluorescent X analysis device, and automatically and quantitatively supplying the sub raw materials for said calculated additive amounts.

3. The process which produces the phosphatic fertilizer according to claim 1, further comprising the steps of:
continuously measuring components of part of said molten slag with a fluorescent X analysis device and feeding back measured values of the fluorescent X analysis device to calculations for additive amounts of sub raw materials.

4. The process which produces the phosphatic fertilizer according to claim 1, wherein
said sludge containing the phosphor component is sludge which collaterally occurs in a sewage treatment or sludge of which a ferrous flocculating agent which traps the phosphor component has been added to sewage water, the phosphor component contained in said sewage water has been precipitated, and the phosphor component has been recovered from said sewage water together with the sludge.

5. The process which produces the phosphatic fertilizer according to claim 1, wherein
said incineration ash containing the phosphor component is ash of which sludge, municipal waste, or industrial waste has been incinerated or ash of which a ferrous flocculating agent which traps the phosphor component has been added to sewage water, the phosphor component contained in said sewage water has been precipitated, the precipitated phosphor component has been recovered from said sewage water together with sludge, and they have been dehydrated and incinerated.

6. The process which produces the phosphatic fertilizer according to claim 1, further comprising the steps of:
continuously supplying said material into said melting furnace with at least two push type supply devices while keeping an interior of said melting furnace in the sealed state such that the interior of said melting furnace is kept in the reducing atmosphere.

7. The process which produces the phosphatic fertilizer according to claim 1, further comprising the steps of:
continuously supplying said material into said melting furnace with at least two dumper type supply devices while keeping an interior of said melting furnace in the sealed state such that the interior of said melting furnace is kept in the reducing atmosphere.

8. The process which produces the phosphatic fertilizer according to claim 1, further comprising the steps of:
continuously supplying said material into said melting furnace with at least two screw type supply devices while keeping an interior of said melting furnace in the sealed state such that the interior of said melting furnace is kept in the reducing atmosphere.

9. The process which produces the phosphatic fertilizer according to claim 1, further comprising the steps of:
performing a water granulating treatment for molten slag which flows from said melting furnace with industrial water at a temperature of 20 to 30 °C, obtaining said water granulated slag, conveying the water granulated slag with a screw conveyor while dehydrating the water granulated slag, and crushing the water granulated slag to grains having diameters of 50 µm to 2 mm with a roll crusher.

10. The process which produces the phosphatic fertilizer according to claim 1, further comprising the steps of:
performing a water granulating treatment for molten slag that flows from said melting furnace with industrial water at a temperature of 20 to 30 °C, obtaining water granulated slag, delivering the water granulated slag into a tank having a dehydration wire mesh with a pump, dehydrating the water granulated slag with said tank, and crushing said water granulated slag to grains having diameters of 50 µm to 2 mm with a roll crusher.

11. The process which produces the phosphatic fertilizer according to claim 1, further comprising the steps of:
quenching molten slag which flows from said melting furnace with air and crushing said molten slag to grains having diameters of 50 µm to 2 mm with a roll crusher.

12. The process which produces the phosphatic fertilizer according to claim 1, further comprising the steps of:
pre-obtaining a content of phosphor contained in sludge or incineration ash containing said phosphor component and specifying amounts of the magnesium component and the calcium component to said sludge or incineration ash containing the phosphor component such that a mole ratio of granulated phosphorus pentoxide, magnesium oxide, and calcium oxide obtained by a water granulating treatment for said molten slag becomes 1 : 1.5 to 6 : 1.5 to 6.

13. An apparatus which produces a phosphatic fertilizer, comprising:
a melting furnace which has at least two raw material supply section, said melting furnace being used in a reducing atmosphere and causing molten metals and molten slag to coexist in a two-liquid separated phase;
a raw material supply device which continuously supplies a raw material composed of sludge or incineration ash containing a phosphor component and a reducing agent or a raw material composed of sludge or incineration ash containing the phosphor component, the reducing agent, and at least one of a magnesium component, a calcium component, a potassium component, and calcium-containing waste into said melting furnace which is kept in the reducing atmosphere while an interior of said melting furnace is kept in a sealed state such that the reducing atmosphere is kept in said melting furnace;
an inner furnace temperature control device which keeps an inner temperature of said melting furnace at around 1400 °C and heats said raw material while suppressing evaporation of said phosphor component;
a quenching device which quenches molten slag which flows from said melting furnace; and
a crushing device which crushes said quenched molten slag to grains having diameters of 50 µm to 2 mm.

14. The apparatus which produces the phosphatic fertilizer according to claim 13, further comprising:
a fluorescent X ray analysis device and a calculation section which continuously measure components of part of said main raw material, calculate additive amounts of sub raw materials based on measured values, and automatically and quantitatively supply the sub raw materials for the calculated amounts.

15. The apparatus which produces the phosphatic fertilizer according to claim 13, further comprising:
a fluorescent X ray analysis device and a calculation section which continuously measure components of part of said molten slag and feed back measured values to calculations for additive amounts of sub raw materials.

16. The apparatus which produces the phosphatic fertilizer according to claim 13, wherein
in said melting furnace, said raw material supply section is composed of at least two push type supply devices.

17. The apparatus which produces the phosphatic fertilizer according to claim 13, wherein
in said melting furnace, said raw material supply section is composed of at least two dumper type supply devices.

18. The apparatus which produces the phosphatic fertilizer according to claim 13, wherein
in said melting furnace, said raw material supply section is composed of at least two screw type supply devices.

19. The apparatus which produces the phosphatic fertilizer according to claim 13, wherein
said quenching device is composed of a water granulating treatment section which performs a water granulating treatment with industrial water at a temperature of 20 to 30 °C and obtains water granulated slag; and a screw conveyer which conveys said water granulated slag while dehydrating said water granulated slag.

20. The apparatus which produces the phosphatic fertilizer according to claim 13, wherein
said quenching device is composed of a water granulating treatment section which performs a water granulating treatment with industrial water at a temperature of 20 to 30 °C and obtains water granulated slag; a tank which stores said water granulated slag and which has a dehydration wire mesh; and a pump which delivers said water granulated slag into said tank.

21. The apparatus which produces the phosphatic fertilizer according to claim 13, wherein
said quenching device is composed of :
a conveyer which conveys molten slag that flows from said melting furnace; and
a fan which quenches said molten slag placed on said conveyer with air.

22. The apparatus which produces the phosphatic fertilizer according to claim 13, wherein
said crushing device, which crushes said quenched molten slag to grains having diameters of 50 µm to 2 mm, is a roll crusher.
